# DEMANDE DE BREVET EUROPEEN

(11) **EP 1 162 094 A1**
(43) Date de publication de la demande: **12.12.2001**
(21) Numéro de dépôt: 01401087.0
(22) Date de dépôt: 26.04.2001
(51) Int. Cl.: B60H 1/18, F02G 5/02, F01N 5/02

(54) **Véhicule automobile comportant des moyens de régulation des températures des gaz d'échappement et de l'habitacle**

(30) Priorité: 08.06.2000 FR 0007367
(71) Demandeur: Peugeot Citroen Automobiles SA, 92200 Neuilly sur Seine (FR)
(72) Inventeur: Noirot, Rémi, 92800 Puteaux (FR)
(74) Mandataire: Bouget, Lucien

(57) **Abrégé**

Le système de dépollution (9) est placé à l'intérieur du compartiment moteur, à l'avant du moteur (5), dans un carter (17) fixé contre une face antérieure du moteur (5) et le carter (17) du système de dépollution est relié à un circuit (19, 21) de mise en circulation d'air au contact d'une surface externe des éléments du système de dépollution (9) et de la surface antérieure du moteur (5). L'air échauffé à l'intérieur du carter (17) du système de dépollution est utilisé pour le chauffage de l'habitacle du véhicule automobile et pour faciliter et accélérer l'échauffement du système de dépollution (9), de manière à le rendre plus rapidement efficace, après le démarrage du moteur (5) du véhicule automobile.

## Description

L'invention concerne un véhicule automobile à moteur thermique comprenant un compartiment moteur dans une partie avant du véhicule, une ligne d'échappement de gaz de combustion du moteur comportant un système de dépollution et un système de chauffage de l'habitacle du véhicule.

Les véhicules automobiles de conception récente comportent généralement une ou plusieurs lignes d'échappement constituées d'un conduit sur lequel est intercalé un système de dépollution et un ou plusieurs dispositifs d'amortissement acoustique tels que des silencieux.

Le système de dépollution peut comporter, de manière classique, un catalyseur d'oxydation de polluants des gaz d'échappement, un filtre à particules et un piège à oxyde d'azote appelé piège à NOx.

Le système de dépollution et les silencieux sont généralement intercalés sur des parties du conduit d'échappement placés dans une disposition longitudinale sous le plancher du véhicule automobile.

Les dispositifs de dépollution et en particulier les catalyseurs d'oxydation des polluants tels que le monoxyde de carbone CO et les hydrocarbures imbrûlés peuvent nécessiter un maintien en température pour fonctionner de manière satisfaisante, de sorte qu'il peut être défavorable de placer ces dispositifs de dépollution dans des zones du véhicule exposées sans protection aux conditions de l'environnement extérieur du véhicule et en particulier sous le plancher du véhicule automobile.

L'habitacle des véhicules automobiles est généralement chauffé par de l'air mis en circulation au contact d'un échangeur de chaleur eau-air dans lequel l'air aspiré à l'extérieur du véhicule automobile est échauffé au contact de l'eau de refroidissement du bloc moteur et de la culasse du véhicule automobile.

Dans certains véhicules automobiles à moteur Diesel et en particulier dans les véhicules automobiles équipés de moteur à injection directe de conception récente, par exemple les moteurs HDI, la vitesse d'échauffement du moteur au démarrage et/ou la température du moteur en marche normale peuvent être plus faibles que dans le cas de moteurs à essence de conception plus classique. Dans ce cas, le chauffage de l'habitacle à partir de la chaleur transmise par l'eau de refroidissement du moteur peut être insuffisant, en particulier à la suite du démarrage du moteur et par temps froid.

Dans le cas des véhicules automobiles comprenant un compartiment moteur dans une partie avant du véhicule dans lequel le moteur thermique de propulsion du véhicule est placé dans une direction transversale, on dispose d'un espace libre de dimensions plus ou moins importantes entre la face antérieure du moteur thermique dirigée vers l'avant du véhicule et la partie antérieure du compartiment moteur dans laquelle est généralement placé l'ensemble des moyens de refroidissement du moteur comportant le ou les radiateurs.

On n'a cependant jamais imaginé d'utiliser cet espace à l'avant du moteur pour loger une partie de la ligne d'échappement du véhicule automobile, ni pour gérer au mieux les conditions thermiques dans lesquelles fonctionnent les catalyseurs de la ligne d'échappement ni pour améliorer le chauffage de l'habitacle du véhicule.

Le but de l'invention est donc de proposer un véhicule automobile comportant un compartiment moteur dans une partie avant du véhicule, un moteur thermique disposé à l'intérieur du compartiment moteur, une ligne d'échappement de gaz de combustion du moteur et au moins une tubulure d'échappement assurant la liaison entre la sortie d'au moins un cylindre du moteur thermique et la ligne d'échappement qui comporte un conduit d'échappement et un système de dépollution intercalé sur le conduit d'échappement, ce véhicule automobile permettant de meilleures conditions de fonctionnement et de protection du système de dépollution de la ligne d'échappement, notamment en ce qui concerne la mise en température des catalyseurs, et un meilleur chauffage de l'habitacle.

Dans ce but, le système de dépollution est placé à l'intérieur du compartiment moteur, à l'avant du moteur, dans un carter fixé contre une face antérieure du moteur et le carter du système de dépollution est relié à un circuit de mise en circulation d'air au contact d'une surface externe des éléments du système de dépollution.

Afin de bien faire comprendre l'invention, on va décrire, à titre d'exemple en se référant aux figures jointes en annexe, deux modes de réalisation d'un véhicule automobile suivant l'invention et différentes variantes de véhicules ayant des moteurs de types différents.

La figure 1 est une vue de dessus d'un véhicule automobile suivant l'invention.

La figure 2 est une vue de face suivant 2 de la figure 1 du moteur et du système de dépollution du véhicule automobile suivant l'invention.

La figure 3 est une vue de côté suivant 3 de la figure 2.

La figure 4 est une vue de face du moteur, du système de dépollution et d'un dispositif de chauffage de l'habitacle d'un véhicule suivant l'invention et suivant un second mode de réalisation.

La figure 5 est une vue de côté suivant 5 de la figure 4.

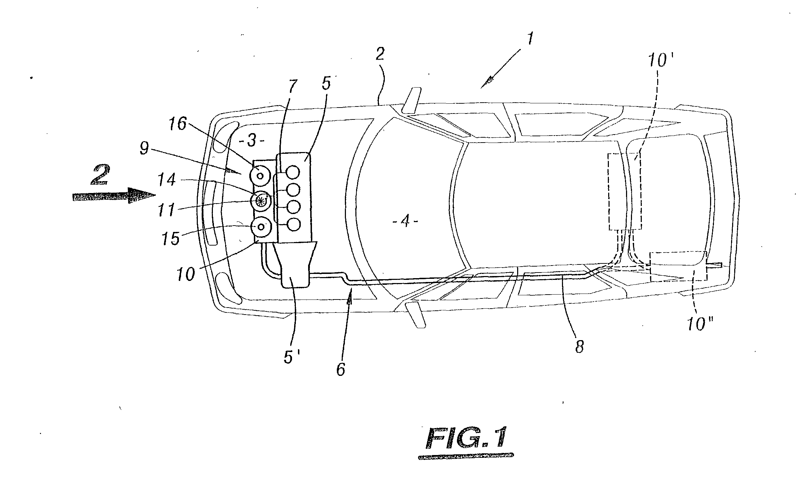

Sur la figure 1, on voit un véhicule automobile suivant l'invention désigné de manière générale par le repère 1 et comportant une carrosserie 2 à l'intérieur de laquelle sont délimités un compartiment moteur 3, à l'avant du véhicule automobile, et un habitacle 4.

Le moteur thermique 5 du véhicule automobile, de type en L et comportant quatre cylindres en ligne, est associé à une boîte de vitesses 5' et disposé transversalement dans le compartiment moteur 3. Le moteur thermique 5 comporte un ensemble 7 de tubulures d'échappement reliées à chacun des cylindres du moteur, au niveau d'une culasse, et à une ligne d'échappement 6 comportant un système de dépollution 9 disposé dans le compartiment moteur 3 à l'avant du moteur thermique 5 et un conduit d'échappement 8 sur lequel est intercalé le système de dépollution 9. Le conduit d'échappement 8 sur lequel est intercalé le système de dépollution 9 est coudé en aval du système de dépollution, avant sa sortie du compartiment moteur 3 et placé dans une direction longitudinale du véhicule automobile, sous une partie latérale du plancher. Des dispositifs d'amortissement acoustique 10' et 10" sont intercalés sur une partie terminale du conduit d'échappement 8 à l'arrière du véhicule 1.

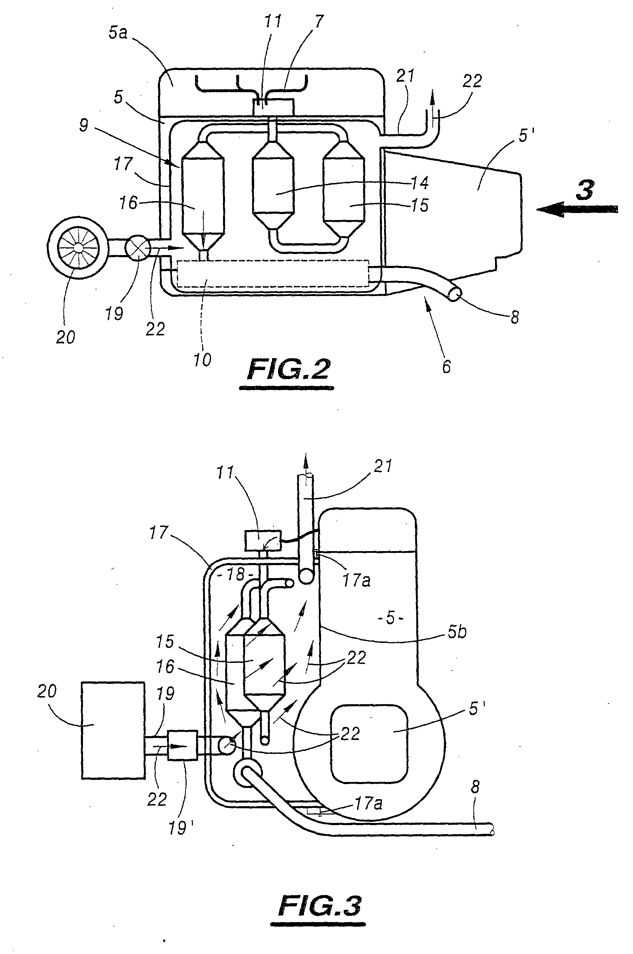

Le système de dépollution 9, comme il est visible sur les figures 1 et 2, comporte un catalyseur de pré-oxydation 14 relié aux tubulures d'échappement 7 du moteur par l'intermédiaire de la turbine du turbocompresseur 11 du moteur, un filtre à particules 15 relié à l'extrémité de sortie du catalyseur de pré-oxydation 14 et un piège à oxyde d'azote ou piège à NOx 16 relié à la partie de sortie du filtre à particules 15.

Un silencieux 10, intercalé sur le conduit d'échappement 8, peut être également placé à l'intérieur du compartiment moteur 3 dans une disposition horizontale en-dessous du système de dépollution 9.

Sur la figure 2, on voit le système de dépollution 9 de la ligne d'échappement 6 qui comporte, intercalés entre des tronçons du conduit d'échappement 8, le catalyseur d'oxydation 14, le filtre à particules 15 et le piège à NOx 16.

L'entrée du catalyseur d'oxydation 14 est reliée, par l'intermédiaire de la turbine d'un turbocompresseur 11, aux tubulures d'échappement 7 reliées à chacun des quatre cylindres en ligne du moteur 5, au niveau de la culasse 5a. De cette manière, le catalyseur d'oxydation 14 est traversé par le gaz de combustion sortant des cylindres du moteur et entraînant la turbine du turbocompresseur 11.

La sortie du catalyseur d'oxydation 14 est reliée à l'entrée du filtre à particules 15 et la sortie du filtre à particules 15 est reliée à l'entrée du piège à NOx 16.

A la sortie du piège à NOx 16, les gaz d'échappement pénètrent dans un amortisseur acoustique 10 réalisé sous la forme d'un silencieux lui-même relié à la partie de la conduite d'échappement 8 de direction longitudinale disposée sous le plancher du véhicule automobile dans une disposition latérale.

Les dispositifs de dépollution 14, 15 et 16 du système de dépollution 9 comportent chacun une enveloppe métallique externe de forme générale cylindrique disposée avec son axe vertical dans une zone du compartiment moteur 3 du véhicule automobile, à l'avant d'une face antérieure 5b du bloc moteur du moteur 5.

Le silencieux 10 comporte une enveloppe cylindrique placée avec son axe horizontal en-dessous des dispositifs de dépollution 14, 15 et 16 du système de dépollution.

L'ensemble du système de dépollution 9 et le silencieux 10 sont disposés à l'intérieur d'un carter en tôle 17 de forme sensiblement parallélépipédique ouvert sur l'une de ses faces qui est fixée le long de la face antérieure 5b du bloc moteur du moteur 5, par l'intermédiaire de dispositifs 17a de fixation amovibles. La fixation amovible du carter 17 sur la face antérieure 5b du bloc moteur permet de procéder éventuellement au remplacement d'un organe défectueux du système de dépollution et au nettoyage du filtre à particules, si une telle opération s'avère nécessaire. Les parois du carter comportent des ouvertures permettant d'accommoder le passage du conduit de jonction entre la turbine du turbocompresseur 11 et l'entrée du catalyseur d'oxydation 14 et de la partie du conduit d'échappement 8 en aval du silencieux 10 passant sous le bloc moteur et/ou la boîte de vitesse 5' du moteur 5 pour se diriger dans une direction longitudinale du véhicule automobile.

Le carter 17 délimite, avec la face antérieure 5b du bloc moteur du moteur 5 dirigée vers l'avant du véhicule automobile, un volume fermé 18.

Le carter 17 communique, au voisinage de sa partie inférieure avec un ventilateur 20 par l'intermédiaire d'une conduite 19 sur laquelle est disposée une vanne d'arrêt ou de réglage 19'. Le carter 17 communique également, au voisinage de sa partie supérieure, par l'intermédiaire d'une conduite 21, avec une partie de l'habitacle du véhicule automobile et par exemple avec une partie d'aspiration d'un ventilateur de mise en circulation d'air de chauffage dans l'habitacle du véhicule automobile. Il est possible d'utiliser un ventilateur ou une turbine de circulation sur l'un seulement des conduits 19 et 21 pour obtenir une circulation d'air entre le conduit 19 et le conduit 21, à travers le volume 18 délimité par le carter 19, comme représenté par les flèches 22.

Le ventilateur 20 aspire de l'air frais dans le compartiment moteur ou dans l'atmosphère entourant le véhicule automobile, cet air frais circulant au contact des enveloppes des dispositifs de dépollution 14, 15 et 16 et de la face 5b du bloc moteur, à l'intérieur du volume 18 délimité par le carter 17, de sorte que l'air mis en circulation s'échauffe et refroidit les enveloppes métalliques externes des dispositifs de dépollution 14, 15 et 16 et du silencieux 10.

L'air distribué dans l'habitacle du véhicule automobile par l'intermédiaire de la conduite 21 permet donc d'assurer le chauffage ou un complément de chauffage de l'habitacle du véhicule automobile.

En réglant le débit d'air circulant à l'intérieur du volume 18, on peut régler les conditions de chauffage de l'habitacle et les conditions de refroidissement limité des éléments de la ligne d'échappement en particulier des dispositifs de dépollution.

La vanne 19' permet d'interrompre toute circulation d'air à l'intérieur du carter 17. Dans ce cas, le carter 17 permet de limiter à un niveau très faible le refroidissement des dispositifs de dépollution qui subissent de plus un certain chauffage venant de la face antérieure 5b du bloc moteur du moteur thermique 5.

Les dispositifs de dépollution peuvent donc être bien isolés de l'environnement extérieur du réacteur nucléaire et servir, en même temps que la paroi antérieure 5b du bloc moteur du moteur thermique 5, au réchauffage de l'habitacle du véhicule automobile, en particulier dans les phases de démarrage et de circulation par temps froid du véhicule automobile.

La circulation dans l'habitacle du véhicule automobile d'air provenant du compartiment moteur et qui a circulé au contact d'une paroi du bloc moteur et du système de dépollution et du silencieux de la ligne d'échappement peut présenter des inconvénients quant à la salubrité de l'air mis en circulation.

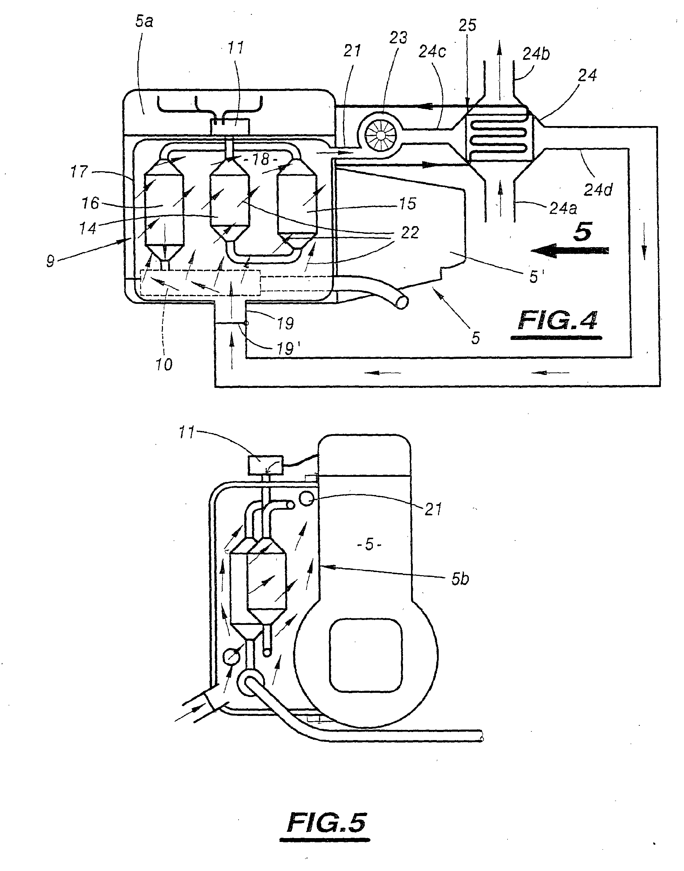

Dans ce cas, on peut utiliser un dispositif d'échange thermique intermédiaire et par exemple l'échangeur thermique eau-air du système de chauffage du véhicule automobile pour assurer un apport de chaleur dans l'habitacle du véhicule automobile, à partir du carter du système de dépollution disposé dans le compartiment moteur, comme il est représenté sur les figures 4 et 5.

Les éléments correspondants sur les figures 4 et 5 d'une part et 2 et 3 d'autre part sont désignés par les mêmes repères.

Le montage du système de dépollution 9 représenté sur les figures 4 et 5, à l'intérieur du carter 17 fixé de manière amovible sur la face avant 5b du bloc moteur du moteur thermique 5 est identique au montage du système de dépollution 9 décrit en regard des figures 2 et 3.

Cependant, la conduite 19 d'arrivée d'air frais de l'extérieur dans la partie inférieure du carter 17 sur laquelle est placée une vanne d'isolement ou de réglage 19' n'est pas raccordée à un ventilateur d'aspiration 20 mais à une conduite de recyclage. La conduite de sortie d'air réchauffé 21 est en revanche reliée à la partie d'aspiration d'un ventilateur 23 dont la partie de refoulement est reliée au carter 24 entourant l'échangeur air-eau 25 du système de chauffage de l'habitacle du véhicule automobile.

Les conduites d'entrée et de sortie d'eau de l'échangeur air-eau 25 sont reliées à la culasse 5a et au bloc moteur du moteur thermique 5 pour permettre une circulation de l'eau de refroidissement du moteur 5, dans l'échangeur 25. Le carter 24 de l'échangeur 25 comporte une entrée d'air frais de l'extérieur 24a, une sortie d'air de chauffage 24b vers l'habitacle 4 du véhicule automobile, l'entrée d'air 24c provenant du volume intérieur 18 du carter 17 et une sortie 24d de l'air provenant du volume 18, après sa circulation au contact de l'échangeur air-eau 25. La sortie 24d peut être reliée à la conduite d'arrivée d'air 19, de manière à recycler l'air ayant circulé dans l'échangeur air-eau 25.

A l'intérieur du carter 24 entourant l'échangeur air-eau 25, l'air provenant du volume 18 du carter 17 est canalisé par des éléments de canalisation, de manière à assurer l'échauffement de l'eau de refroidissement du moteur 5 circulant dans l'échangeur de chaleur 25, en contact thermique avec l'air provenant du volume 18. De plus, les éléments de canalisation séparent l'air provenant du volume 18 de l'air frais s'échauffant par circulation en contact thermique avec l'eau de refroidissement du moteur dans l'échangeur de chaleur 25 et assurant le chauffage de l'habitacle 4 du véhicule automobile.

Comme il est représenté par les flèches 22, l'air aspiré dans la conduite 19 pénètre dans la partie inférieure du carter 17 et circule successivement en contact avec les surfaces extérieures du silencieux 10, des enveloppes externes des dispositifs de dépollution 14, 15 et 16 et de la face antérieure 5b du bloc moteur du moteur thermique 5, de telle sorte que de l'air échauffé aspiré par le ventilateur 23 sort par la conduite 21 puis est refoulé dans une partie d'échange de l'échangeur de chaleur 25 où cet air échauffé assure une élévation de température de l'eau de refroidissement du moteur en circulation dans l'échangeur 25.

On obtient un effet de réchauffement de l'eau de refroidissement du moteur qui peut être important, en particulier dans la phase de combustion des suies carbonées déposées dans le filtre à particules 15. De ce fait, on obtient un chauffage nettement amélioré de l'habitacle du véhicule automobile dans les phases de démarrage ou de circulation par temps froid du véhicule automobile, l'air frais aspiré par l'ouverture 24a et sortant par l'ouverture 24b du carter 24 de l'échangeur 25 pouvant être échauffé de manière plus rapide et plus efficace par l'eau de refroidissement du moteur 5.

En outre, le carter 17 assure une protection thermique des dispositifs de dépollution 14, 15 et 16, si bien que leur échauffement peut être plus rapide pour parvenir à leur température de début de fonctionnement ou de fonctionnement idéal.

En particulier, le catalyseur d'oxydation 14 peut arriver à sa température d'activation plus rapidement, pendant les phases de démarrage du moteur, et son maintien à une température de fonctionnement satisfaisante est obtenu plus facilement.

On peut favoriser, pendant certaines phases, l'échauffement et le maintien en température des dispositifs de dépollution, en réduisant le débit de circulation de l'air au contact des dispositifs de dépollution, par exemple en utilisant une vanne de réglage 19'. Le système peut également être activé au cours des phases de roulage intense, créant de hautes températures au sein du système de dépollution, assurant ainsi un refroidissement périphérique, garant de la tenue et de la longévité des organes catalytiques (par exemple protection des pièges à NOx).

Le véhicule automobile suivant l'invention permet donc à la fois d'obtenir un fonctionnement amélioré et un meilleur rendement des dispositifs de dépollution et un meilleur chauffage de l'habitacle du véhicule automobile, en particulier dans le cas de moteurs Diesel, par exemple de type HDI.

L'invention ne se limite pas strictement au mode de réalisation qui a été décrit.

C'est ainsi que la paroi du carter 17, au lieu d'être constituée par une simple tôle de protection, peut comporter des parois isolantes améliorant l'isolation thermique autour du système de dépollution et permettant d'éviter toute brûlure d'un mécanicien réparateur qui aurait à intervenir dans sa périphérie..

On a décrit la réalisation de l'invention dans le cas d'un moteur thermique en L dont les tubulures d'échappement sont dirigées vers l'avant du moteur 5, à partir de la culasse 5a. L'invention s'applique également dans le cas de tubulures d'échappement dirigées vers l'arrière du moteur, à partir de la culasse, une conduite de liaison permettant alors d'amener les gaz d'échappement depuis l'arrière jusque l'avant du moteur où est disposé le système de dépollution.

Il est également possible de réaliser, suivant l'invention, un véhicule automobile comportant un moteur en V ayant une disposition transversale dans le compartiment moteur du véhicule automobile. Le système de dépollution est alors situé devant l'une des lignes de cylindres du moteur en V, contre une face du bloc moteur dirigée vers l'avant du véhicule automobile et sur laquelle est fixé le carter d'isolation thermique du système de dépollution.

L'invention s'applique dans le cas de tout système de dépollution comportant un arrangement des organes de dépollution sur la face avant du moteur, différent de ceux qui ont été décrits. Les organes de dépollution peuvent être placés les uns à la suite des autres dans un ordre quelconque défini par les conditions spécifiques de fonctionnement du système de dépollution.

De manière générale, l'invention s'applique à tout véhicule automobile dont la propulsion est assurée par un moteur thermique, que ce moteur thermique soit de type Diesel ou à essence.

## Revendications

1. Véhicule automobile comprenant un compartiment moteur (3) dans une partie avant du véhicule (1), un moteur thermique (5) disposé à l'intérieur du compartiment moteur (3), une ligne d'échappement (6) de gaz de combustion du moteur et au moins une tubulure d'échappement (7) assurant la liaison entre la sortie d'au moins un cylindre du moteur thermique (5) et la ligne d'échappement (6) qui comporte un conduit d'échappement (8) et un système de dépollution (9) intercalé sur le conduit d'échappement (8), **caractérisé par le fait que** le système de dépollution (9) est placé à l'intérieur du compartiment moteur (3), à l'avant du moteur (5), dans un carter (17) fixé contre une face antérieure (5b) du moteur (5) et que le carter (17) du système de dépollution est relié à un circuit (19, 21) de mise en circulation d'air au contact d'une surface externe du système de dépollution (14, 15, 16).

2. Véhicule automobile suivant la revendication 1, **caractérisé par le fait que** le carter (17) renferme, de plus, au moins un silencieux (10) de la ligne d'échappement (6).

3. Véhicule automobile suivant l'une quelconque des revendications 1 et 2, **caractérisé par le fait que** le circuit de mise en circulation d'air (19, 21) comporte une conduite (19) d'introduction d'air frais de l'extérieur dans le carter (17) et une conduite (21) d'évacuation d'air chaud dans l'habitacle (4) du véhicule automobile.

4. Véhicule automobile suivant la revendication 3, **caractérisé par le fait qu'**un ventilateur (20) d'aspiration d'air frais est disposé sur la conduite d'introduction d'air frais (19) dans le carter (17).

5. Véhicule automobile suivant l'une quelconque des revendications 1 et 2, **caractérisé par le fait que** le circuit de mise en circulation d'air dans le carter (17) du système de dépollution (9) comporte une conduite (19) d'entrée d'air frais dans le carter (17) et une conduite (21) de sortie d'air échauffé du carter (17) reliée à une partie d'aspiration d'un ventilateur (23) dont la partie de refoulement est reliée à un carter (24) dans lequel est disposé un échangeur de chaleur (25) entre de l'eau de refroidissement du moteur (5) du véhicule automobile et de l'air de chauffage de l'habitacle (4) du véhicule automobile, le carter (24) de l'échangeur de chaleur (25) comportant une entrée d'air frais (24a) et une sortie d'air échauffé en direction de l'habitacle (4) du véhicule automobile et une entrée (24c) d'air échauffé provenant du carter (17) du système de dépollution, des éléments de canalisation de l'air échauffé pour le faire circuler en contact thermique avec l'eau de refroidissement à l'intérieur de l'échangeur de chaleur (25) et une sortie (24d) de l'air ayant circulé en contact thermique avec l'eau circulant dans l'échangeur de chaleur (25), l'air de chauffage de l'habitacle (4) du véhicule automobile étant séparé par les moyens de canalisation d'air de l'air ayant circulé dans le carter (17) du système de dépollution.

6. Véhicule automobile suivant l'une quelconque des revendications 1 à 5, **caractérisé par le fait que** le carter (17) est fixé de manière amovible sur la face antérieure (5b) du bloc moteur du moteur thermique, c'est-à-dire la face du bloc moteur dirigée vers l'avant du véhicule automobile.
